# EUROPÄISCHE PATENTSCHRIFT

(11) **EP 0 517 717 B1**
(45) Veröffentlichungstag und Bekanntmachung des Hinweises auf die Patenterteilung: **12.05.1999**
(21) Anmeldenummer: 91903920.6
(22) Anmeldetag: 19.02.1991
(51) Int. Cl.: C09J 103/08, C09J 101/28, C08L 3/08

(54) **DIE VERWENDUNG EINES TROCKENGEMISCHES AUS METHYLCELLULOSE UND CARBOXYMETHYLSTÄRKE ZUR HERSTELLUNG WÄSSRIGER KLEBSTOFFE MIT VERMINDERTER TROCKENKLEBKRAFT UND GEWÜNSCHTENFALLS GUTER FEUCHTFESTIGKEIT**
USE OF A DRY MIXTURE CONTAINING METHYL CELLULOSE AND CARBOXY METHYL STARCH FOR THE PRODUCTION OF AQUEOUS ADHESIVES WITH REDUCED DRY ADHESION AND, IF DESIRED, GOOD DAMP RESISTANCE
UTILISATION DE MELANGE SEC CONTENANT DE LA METHYLCELLULOSE ET DE L'AMIDON DE CARBOXYMETHYLE POUR LA FABRICATION DE COLLES AQUEUSES A FORCE D'ADHERENCE A SEC REDUITE ET EVENTUELLEMENT RESISTANT A L'HUMIDITE

(30) Priorität: 26.02.1990 DE 4006001
(43) Veröffentlichungstag der Anmeldung: 16.12.1992
(73) Patentinhaber: Henkel Kommanditgesellschaft auf Aktien, 40191 Düsseldorf (DE)
(72) Erfinder: HOFFMANN, Heinz-Peter, D-4000 Düsseldorf 1 (DE); SIPMANN, Sabine, D-4000 Düsseldorf 13 (DE); SCHÖTTMER, Bernhard, D-4000 Düsseldorf 13 (DE); HALLER, Werner, D-4006 Erkrath (DE); WEGNER, Jürgen, D-4000 Düsseldorf (DE)
(86) Internationale Anmeldenummer: EP9100309
(87) Internationale Veröffentlichungsnummer: WO9113121

(56) Entgegenhaltungen:
- EP-A- 0 103 772
- WPIL, File Supplier, AN = 86-090866, Derwent Publications Ltd, (London, GB), & JP-A-61036385 (SUNROCK) 21. Februar 1986

## Beschreibung

Die Erfindung betrifft die Verwendung von zur Herstellung von wäßrigen Klebstoffen geeigneten Trockengemischen, bestehend aus Methylcellulose, Carboxylmethylstärke, gewünschtenfalls Kunstharz-Redispersionspulver und gewünschtenfalls weiteren Hilfsstoffen.

Auf Cellulose- und/oder Stärkederivaten basierende Trockengemische, welche zur Herstellung wäßriger Klebstoffzubereitungen geeignet sind, sind dem Fachmann bekannt. Derartige wäßrige Klebstoffzubereitungen eignen sich gut zum Verkleben von Papier, insbesondere zum Tapezieren von Wänden und Decken und werden häufig auch als (Tapeten-)Kleister bezeichnet.

Die Vielfalt der obengenannten Cellulose- und Stärkederivate läßt eine sehr große Anzahl von möglichen Kombinationen unterschiedlichster Rohstoffe zu. Zu den wichtigsten zählen u.a. Methylcellulose (MC), Methylhydroxypropylcellulose (MHPC), Hydroxyethylcellulose (HEC), Carboxymethylcellulose (CMC) und weitere wasserlösliche Celluloseether sowie aufgeschlossene wasserlösliche Stärke, carboxymethylierte oder alkoxymethylierte Stärke, wie Carboxymethylstärke (CMS) oder Hydroxypropylstärke (HPS). Derartige Trockengemische zur Herstellung von wäßrigen Klebstoffen bzw. Kleistern auf Basis von wasserlöslichen nicht-ionogenen Celluloseethern und wasserlöslichen, anionischen Gruppen enthaltenen Stärkeethern sowie deren Verwendung zum Verkleben von Papieren sind z.B. in der Offenlegungsschrift DE 32 32 614 beschrieben. Auch besondere Herstellungsverfahren derartiger als Kleisterbasis geeigneter Trockenprodukte sind dem Fachmann bekannt, z.B. aus der Offenlegungsschrift DE 37 34 491. Aus diesen und anderen Schriften sind auch Kombinationen von Methylcellulose und Carboxymethylstärke als derartige Trockengemische bekannt. Nicht bekannt und vorbeschrieben ist bislang, daß bei einem bestimmten Verhältnis dieser Stoffe sich spezifische Klebeeigenschaften einstellen lassen.

Bei den meisten der bislang bekannten Trockengemische, insbesondere bei deren Verwendung als Tapetenkleister, wird es vielfach als unerwünscht empfunden, daß die damit hergestellten Verklebungen so stark sind, daß sich die verbundenen Substrate nur schwer oder nicht voneinander trennen lassen. Insbesondere bei Tapezierarbeiten erweist es sich als negativ, wenn die Ablösung des Altbelages nur mit großer Mühe, hohem Zeitaufwand und gegebenenfalls mit Hilfsmitteln wie Tapetenablösern zu erreichen ist. Um dieses Problem zu reduzieren, ist es zur Zeit Stand der Technik, derartige Kleber z.B. mit Hilfe von Paraffinemulsionen dehäsiv auszurüsten, den Untergrund vor einer Verklebung mit einer dehäsiv eingestellten Grundierung zu versehen oder auf ihrer Rückseite dehäsiv ausgerüstete Wandbeläge zu benutzen. Diese Möglichkeiten bringen jedoch andere Nachteile mit sich. So ist es z.B. nicht möglich einen mit Paraffinemulsion dehäsiv eingestellten Kleber im Handel als Trockengemisch anzubieten.

Das Dokument EP-A-0 103 772 beschreibt Trockengemische der obengenannten Art zur Herstellung von wäßrigen Klebstoffen aus Methylcellulose und Carboxymethylstärke im Verhältnis von 5 : 95 bis 80 : 20. Um ein späteres Abziehen einer Tapete zu erleichtern, muß der Untergrund präpariert werden.

In der JP-A-61 036 385 wird ein Klebstoff aus Methylcellulose, Polyvinylacetat, Benzimidazol und Wasser im Gewichtsverhältnis von 10 : 0,2 : 1 : 0,15 beschrieben. Er ermöglicht die leichte Entfernung von Tapeten.

Überraschenderweise wurde gefunden, daß Carboxymethylstärke und Methylcellulose in einem bestimmten Verhältnis zueinander einen Klebstoff ergeben, der ein Trockenklebkraftsminimum aufweist, was es möglich macht, einen trocken abziehbaren Kleber ohne dehäsive Zusätze zu rezeptieren. Gleichzeitig kann man jedoch bei Mitverwendung von Kunstharz-Redispersionspulvern gute Feuchtfestigkeiten erzielen.

Aufgabe der Erfindung ist es, ein Trockengemisch bereitzustellen, welches sich zur Herstellung von wäßrigen Klebstoffen, insbesondere zum Verkleben von Wandbelägen, eignet und darüber hinaus so eingestellt ist, daß der Klebstoff eine relativ geringe Trockenklebkraft besitzt, so daß die Substrate im trockenen Zustand leicht voneinander zu trennen sind. Gewünschtenfalls soll auch eine hohe Feuchtfestigkeit gegeben sein, insbesondere, wenn die Beläge nach dem Verkleben überstrichen werden sollen oder in sogenannten Feuchträumen verklebt werden sollen.

Die erfindungsgemäße Aufgabe wurde gelöst durch die Verwendung von zur Herstellung von wäßrigen Klebstoffen geeigneten Trockengemischen, bestehend aus
- Methylcellulose (I),
- Carboxymethylstärke (II),
- gewünschtenfalls Kunstharz-Redispersionspulver und
- gewünschtenfalls weiteren Hilfsstoffen,
wobei zur leichten Trennung der Substrate - ohne den Untergrund vor seiner Verklebung mit einer dehäsiv eingestellten Grundierung zu versehen - einer mit dem wäßrigen Klebstoff hergestellten, getrockneten Klebung (I) und (II) ein Verhältnis zueinander von 3 : 97 bis 30 : 70 aufweisen.

Von den beiden an und für sich bekannten und in den genannten Trokkengemischen einsetzbaren Substanzen (I) und (II) besitzt die Carboxymethylstärke die geringere Trockenklebkraft. Werden nun ausgehend von 100 %-iger CMS Gemische von (I) und (II) bis zu einem Verhältnis von 30 : 70 auf die Trockenklebkraft geprüft, so ergibt sich, daß diese unterhalb der Trockenklebkraft von CMS liegt. Eine deutliche Absenkung der Trockenklebkraft ist schon bei einem Zusatz von 1 Gew.-% MC, bezogen auf die Summe von (I) und (II), zu beobachten. Eine starke Absenkung der Trockenklebkraft ist bei einem Mischungsverhältnis von (I) zu (II) im Bereich von 4 : 96 bis 20 : 80 zu verzeichnen. Die geringste Trockenklebkraft ist im Bereich von 5 : 95 bis 10 : 90 zu erreichen. Die genannten Bereiche werden daher im Rahmen der vorliegenden Erfindung bevorzugt. Mit derartigen Mischungen ausgeführte Klebungen können z.B. die Trockenklebkraft von CMS um ein Drittel unterschreiten. Damit kann eine leichtere Trennung der Substrate einer getrockneten mit diesem Klebstoff hergestellten Klebung möglich gemacht werden. Dies gilt insbesondere für Tapeten oder ähnliche Wandbeläge, welche mit derartigen Klebstoffen auf im Baugewerbe üblichen Untergründen geklebt wurden. Renovierungsarbeiten werden also erleichtert, wenn die alten Tapeten bzw. Wandbeläge mit Kleister auf Basis der erfindungsgemäßen Trockengemische verklebt wurden und leicht vom Untergrund trocken abgezogen werden können.

Neben den Substanzen (I) und (II) enthalten die Trockengemische gewünschtenfalls Kunstharz-Redispersionspulver. Derartige Kunstharze sind üblicherweise filmbildende thermoplastische Polymerisate. Als in Wasser redispergierbare Polymerverbindungen eignen sich alle in der bisherigen Praxis als reine Mischungsprodukte eingesetzten Polymertypen. In Betracht kommen hier sowohl Homopolymere und/oder Copolymere der jeweils ausgewählten Stoffklassen. Typische Vertreter für diese Polymerverbindungen sind Vinylester niederer Carbonsäuren, wobei dem Vinylacetat und/oder dem Vinylpropionat besondere Bedeutung zukommen. Neben den Homopolymeren auf dieser Basis sind in der Praxis eingesetzte Copolymerisate, beispielsweise Vinylacetat/Maleinat-Copolymere oder Ethylen/Vinylacetat-Copolymere. Eine weitere wichtige Klasse sind entsprechende (Meth)Acrylat-Homo- und/oder -copolymere, wobei ein Beispiel für geeignete Copolymere etwa Styrolacrylat ist. Unter Copolymere werden dabei Copolymerisate verstanden, die aus der Reaktion von zwei oder mehr verschiedenen Stoffklassen, welche sich als polymerisierbare Monomere eignen, hervorgehen.

Eine Zugabe derartiger Kunstharze, insbesondere Polyvinylacetat, zu den Trockengemischen führt zu erhöhten Feuchtfestigkeiten. Diese Eigenschaft ist speziell dann erwünscht, wenn Verklebungen in stark feucht-belasteten Räumen wie Badezimmer oder Küche ausgeführt werden sollen und ist darüber hinaus auch dann erwünscht, wenn auf dem verklebten Wandbelag anschließend Anstricharbeiten erfolgen sollen. Die genannten Kunstharze liegen in Form von sogenannten Redispersionspulvern vor. Ein derartiger Zusatz beeinflußt im wesentlichen nur die Feuchtfestigkeit. Die beschriebene Absenkung der Trockenfestigkeit der Trockengemische bleibt davon im wesentlichen unberührt. Als geeignet haben sich Zusätze von Kunstharz-Redispersionspulvern von bis zu 40 Gew.-% bezogen auf das Trockengemisch erwiesen. Besonders bevorzugt ist ein Bereich von 10 bis 30 Gew.-% Kunstharz-Redispersionspulver, da in diesem Bereich ein Optimum der anwendungstechnischen Eigenschaften erreicht werden kann.

Für die Herstellung von Kleistern gehören nicht-ionogene Celluloseether insbesondere die Methylcellulose zu den geeigneten Substanzen. In den Trockengemischen ist eine Methylcellulose enthalten, die einen bevorzugten Methylierungsgrad von etwa 1,3 bis 2,6 aufweist. Darüber hinaus kann die Methylcellulose in einer besonderen Ausführungsform ethoxyliert und/oder propoxyliert sein. Bevorzugt ist ein Alkoxylierungsgrad von 0,05 bis 1,5 (MS).

Als carboxymethylierte Stärke eignen sich sämtliche entsprechend modifizierten natürlichen Stärketypen, z.B. aus Kartoffeln, Mais, Weizen, Reis und dergleichen, wobei Derivate auf Basis von Kartoffel- und/oder Maisstärke besonders geeignet sind. In einer bevorzugten Ausführungsform enthalten die erfindungsgemäßen Trockengemische Carboxymethylstärke mit einem Carboxymethylierungsgrad von 0,1 bis 0,7 (DS).

Die Trockengemische enthalten gewünschtenfalls weitere Hilfsstoffe. In einer besonderen Ausführungsform sind insbesondere Füllmittel, Netzmittel und/oder Konservierungsstoffe enthalten. Als Füll- oder auch Stellmittel können beispielsweise Kaolin und Kreide eingesetzt werden. Als Netzmittel können alle für derartige Verwendungszwecke bekannten Tenside eingesetzt werden. Geeignete Konservierungsstoffe sind dem Fachmann ebenfalls bekannt. Die zusätzlich zu den Hauptkomponenten gewünschtenfalls mitverwendeten Hilfsmittel machen einen gewichtsmäßig untergeordneten Anteil aus, er der vorzugsweise weniger als 20 Gew.-% des Trockengemischs beträgt.

Ein geeignetes, relativ einfaches Verfahren zur Herstellung der Trockengemische besteht darin, daß die einzelnen Bestandteile wie MC, CMS sowie gewünschtenfalls Kunstharz-Redispersionspulver und gewünschtenfalls weitere Hilfsstoffe als Trockenstoffe physikalisch miteinander vermengt werden. Dabei ist bevorzugt, durch eine innige Vermengung eine möglichst homogene Verteilung zu erreichen. Ein weiteres geeignetes Verfahren ist das Walzentrocknungsverfahren wie es z.B. in der genannten DE 37 34 491 beschrieben ist. Ebenfalls geeignet ist das sogenannte Sprühtrocknungsverfahren beschrieben in der nicht-vorveröffentlichten deutschen Anmeldung mit dem Ursprungsaktenzeichen DE 39 12 983. Bei den beiden letztgenannten Verfahren wird aus den trockenen Bestandteilen zunächst mit Flüssigkeit ein pumpbarer Slurry hergestellt, welcher dann je nach Verfahren entweder in dünnen Schichten auf Walzen getrocknet oder in an und für sich bekannter Weise in einem Sprühturm sprühgetrocknet wird.

### Beispiele

Bei den nachfolgenden Versuchen wurden je 10 g der Pulvermischung in 250, 320, 400, 500 oder 600 ml Leitungswasser von 20 °C unter Rühren gelöst und 1 Stunde stehen gelassen. Dementsprechend ergeben sich die in den nachfolgenden Tabellen aufgeführten Verdünnungsverhältnisse von 1 : 25, 1 : 32, 1: 40, 1: 50 und 1 : 60. Die Mischungsverhältnisse sind jeweils in Gewichtsteilen angegeben. Anschließend wurde die Trockenklebekraft der jeweiligen Lösung wie folgt bestimmt:

Auf ein Buchensperrholzbrettchen (8 cm X 5 cm X 0,4 cm) wurde auf einer Fläche von 3 cm X 5 cm ein etwa 200 µm starker Klebstoff aufgetragen und dieses Brettchen mit einem weiteren Brettchen gleicher Größe überlappend verklebt. Die Verklebung wurde mit vier Klammern justiert und 24 Stunden bei 20 °C und 60 % relativer Luftfeuchte gelagert und anschließend in einer Zerreißprüfmaschine (Firma Zwick) bis zur Zerstörung der Klebung belastet. Es wurden jeweils 10-fach Bestimmungen durchgeführt.

Tabelle 1 zeigt die Klebkraft der Mischung von CMS und MC über den gesamten Mischungsbereich für verschiedene Verdünnungsverhältnisse. Bei Erhöhung des Anteils der Methylcellulose war bis zu einem Verhältnis von 30 : 70 von MC zu CMS eine geringere Klebkraft als mit reiner CMS zu verzeichnen.

Tabelle 2 zeigt die Klebkraft für einen Ausschnitt des Mischungsbereichs mit jeweils kleineren Änderungen im Mischungsverhältnis als in Tabelle 1.

Tabelle 3 zeigt die Klebkraft für die gleichen MC/CMS Mischungsverhältnisse wie in Tabelle 1 mit einem konstanten Zusatz an Polyvinylacetat (15 Gew.-% bezogen auf die Gesamtmischung). Auch mit diesem Zusatz war ein Klebkraftminimum zu beobachten.

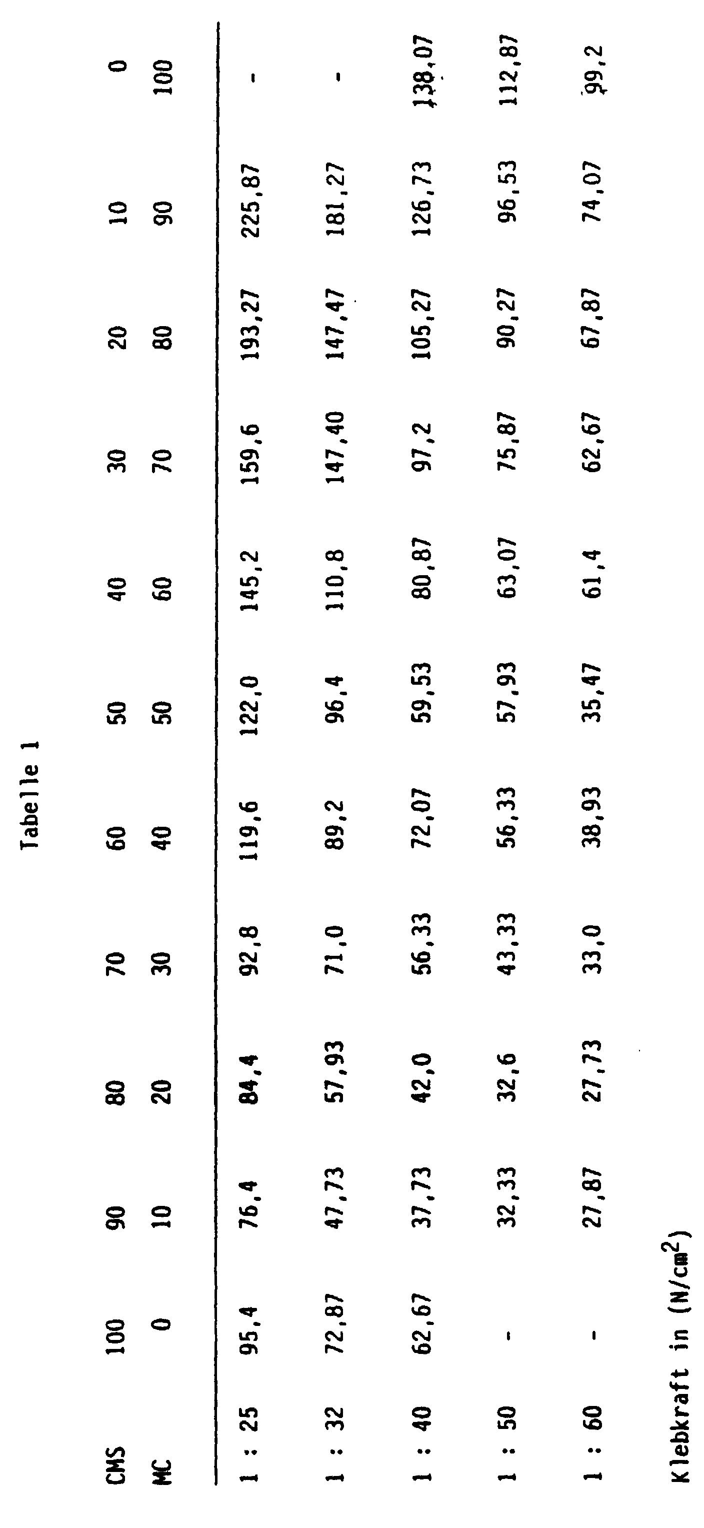

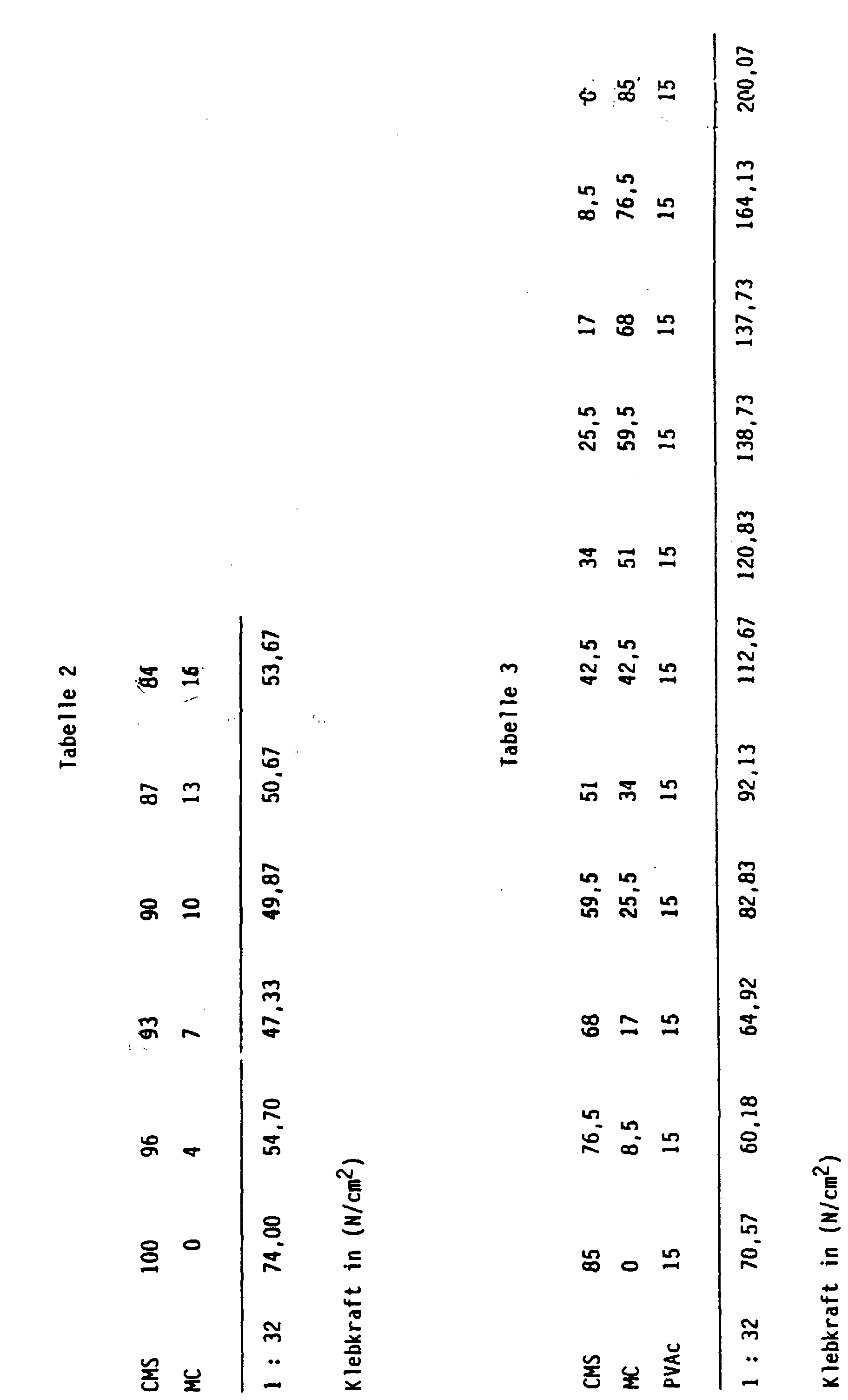

## Patentansprüche

1. Verwendung eines Trockengemisches, bestehend aus
- Methylcellulose (I),
- Carboxymethylstärke (II),
- gewünschtenfalls Kunstharz-Redispersionspulver und
- gewünschtenfalls weiteren Hilfsstoffen, wobei (I) und (II) ein Verhältnis zueinander von 3 : 97 bis 30 : 70 aufweisen
zur Herstellung von wäßrigen Klebstoffen, wobei eine mit dem wäßrigen Klebstoff hergestellte, getrocknete Klebung leicht getrennt werden kann, ohne den Untergrund vor seiner Verklebung mit einer dehäsiv eingestellten Grundierung zu versehen.

2. Verwendung nach Anspruch 1, dadurch gekennzeichnet, daß das Verhältnis von (I) zu (II) 4 : 96 bis 20 : 80, insbesondere 5 : 95 bis 10 : 90, beträgt.

3. Verwendung nach Ansprüchen 1 und 2, dadurch gekennzeichnet, daß bis zu 40 Gew.-%, insbesondere 10 bis 30 Gew.-%, Kunstharz-Redispersionspulver enthalten sind.

4. Verwendung nach Ansprüchen 1 bis 3, dadurch gekennzeichnet, daß als Kunstharz-Redispersionspulver Polyvinylacetat enthalten ist.

5. Verwendung nach Ansprüchen 1 bis 4, dadurch gekennzeichnet, daß die Methylcellulose einen Methylierungsgrad von 1,3 bis 2,6 aufweist.

6. Verwendung nach Ansprüchen 1 bis 5, dadurch gekennzeichnet, daß die Methylcellulose ethoxyliert und/oder propoxyliert ist, insbesondere mit einem Alkoxylierungsgrad von 0,05 bis 1,5.

7. Verwendung nach Ansprüchen 1 bis 6, dadurch gekennzeichnet, daß die Carboxymethylstärke einen Carboxymethylierungsgrad von 0,1 bis 0,7 (DS) aufweist.

8. Verwendung nach Ansprüchen 1 bis 7, dadurch gekennzeichnet, daß als weitere Hilfsstoffe Füllmittel, Netzmittel und/oder Konservierungsstoffe, vorzugsweise insgesamt weniger als 20 Gew.-% enthalten sind.

9. Verwendung nach Ansprüchen 1 bis 8, gekennzeichnet durch die Herstellung des Trockengemisches durch Vermengen der trockenen Bestandteile oder durch Walzen- oder Sprühtrocknung eines aus den Bestandteilen hergestellten Slurries.

10. Verwendung der wäßrigen Klebstoffe nach Ansprüchen 1 bis 9 zum Verkleben von Papier oder anderen saugfähigen Cellulosematerialien, insbesondere Tapeten.

## Claims

1. The use of a dry mixture consisting of
- methyl cellulose (I),
- carboxymethyl starch (II),
- if desired, synthetic resin redispersion powder and
- if desired, other auxiliaries, (I) and (II) being present in a ratio to one another of 3:97 to 30:70,
for the production of water-based adhesives, a dried bond formed with the water-based adhesive being easy to separate without the substrate having to be coated with a dehesive primer before bonding.

2. The use claimed in claim 1, characterized in that the ratio of (I) to (II) is 4:96 to 20:80 and, more particularly, 5:95 to 10:90.

3. The use claimed in claims 1 and 2, characterized in that up to 40% by weight and, more particularly, 10 to 30% by weight of the synthetic resin redispersion powder are present.

4. The use claimed in claims 1 to 3, characterized in that polyvinyl acetate is present as the synthetic resin redispersion powder.

5. The use claimed in claims 1 to 4, characterized in that the methyl cellulose has a degree of methylation of 1.3 to 2.6.

6. The use claimed in claims 1 to 5, characterized in that the methyl cellulose is ethoxylated and/or propoxylated, more particularly with a degree of alkoxylation of 0.05 to 1.5.

7. The use claimed in claims 1 to 6, characterized in that the carboxymethyl starch has a degree of carboxymethylation of 0.1 to 0.7 (DS).

8. The use claimed in claims 1 to 7, characterized in that fillers, wetting agents and/or preservatives are present as further auxiliaries, preferably in a total quantity of less than 20% by weight.

9. The use claimed in claims 1 to 8, characterized by the production of the dry mixture by mixing of the dry constituents or by roller drying or spray drying of a slurry prepared from the constituents.

10. The use of the water-based adhesives claimed in claims 1 to 9 for bonding paper or other absorbent cellulose materials, more particularly wallpapers.

## Revendications

1. Utilisation d'un mélange sec se composant de
- méthylcellulose (I),
- carboxyméthylamidon (II),
- si on le souhaite, des poudres de redispersion de résine synthétique et
- si on le souhaite, d'autres adjuvants, auquel cas (I) et (II) sont entre eux dans un rapport de 3:97 à 30:70, pour la fabrication de colles aqueuses, auquel cas un collage réalisé avec la colle aqueuse peut être aisément séparé, sans enduire le substrat avant son collage d'une couche d'apprêt rendue déhésive.

2. Utilisation selon la revendication 1, caractérisée en ce que (I) et (II) sont entre eux dans un rapport de 4:96 à 20:80, en particulier de 5:95 à 10:90.

3. Utilisation selon les revendications 1 et 2, caractérisée en ce que le contenu en poudre de redispersion de résine synthétique atteint 40 % en particulier 10 à 30 % en poids.

4. Utilisation selon les revendications 1 à 3, caractérisée en ce que de l'acétate de polyvinyle est contenu comme poudre de redispersion de résine synthétique.

5. Utilisation selon les revendications 1 à 4, caractérisée en ce que la méthycellulose présente un degré de méthylation de 1,3 à 2,6.

6. Utilisation selon les revendications 1 à 5, caractérisée en ce que la méthycellulose est éthoxylée et/ou propoxylée, en particulier avec un degré d'alcoxylation de 0,05 à 1,5.

7. Utilisation selon les revendications 1 à 6, caractérisée en ce que le carboxyméthylamidon présente un degré de carboxyméthylation de 0,1 à 0,7 (DS) .

8. Utilisation selon les revendications 1 à 7, caractérisée en ce que des charges, des agents mouillants et/ou des conservateurs sont contenus comme autres adjuvants, de préférence dans une proportion totale inférieure à 20 % en poids.

9. Utilisation selon les revendications 1 à 8, caractérisée par la fabrication du mélange sec, par mélangeage des constituants secs ou par séchage au tambour ou par pulvérisation d'une suspension épaisse (slurry) préparée à partir des constituants.

10. Utilisation des colles aqueuses selon les revendications 1 à 9, pour le collage du papier ou d'autres matières cellulosiques absorbantes, en particulier des papiers peints.
